(19) Europäisches Patentamt
European Patent Office
Office européen des brevets

(11) EP 2 360 619 A1

(12) EUROPEAN PATENT APPLICATION
published in accordance with Art. 153(4) EPC

(43) Date of publication:
24.08.2011 Bulletin 2011/34

(51) Int Cl.:
G06K 9/00 (2006.01)　　G06F 17/30 (2006.01)

(21) Application number: 09832848.7

(22) Date of filing: 14.04.2009

(86) International application number:
PCT/CN2009/071257

(87) International publication number:
WO 2010/069166 (24.06.2010 Gazette 2010/25)

(84) Designated Contracting States:
AT BE BG CH CY CZ DE DK EE ES FI FR GB GR HR HU IE IS IT LI LT LU LV MC MK MT NL NO PL PT RO SE SI SK TR

(30) Priority: 19.12.2008 CN 200810207425

(71) Applicant: Miaxis Biometrics Co., Ltd
Zhejiang 310012 (CN)

(72) Inventors:
• LIU, Zhongqiu
Zhejiang 310012 (CN)

• LI, Jian
Zhejiang 310012 (CN)
• LV, Hongxiao
Zhejiang 310012 (CN)
• HOU, Yanqin
Zhejiang 310012 (CN)
• CHEN, Gaoshu
Zhejiang 310012 (CN)
• JIANG, Wenqi
Zhejiang 310012 (CN)

(74) Representative: Ström & Gulliksson AB
Box 4188
203 13 Malmö (SE)

(54) FAST FINGERPRINT SEARCHING METHOD AND FAST FINGERPRINT SEARCHING SYSTEM

(57) A fast fingerprint searching method and fast fingerprint searching system are provided. Fingerprint templates in the fingerprint template library are classified into templates with core points and templates without core points. The fast fingerprint searching method involves: collecting the fingerprint templates needed to be compared and finishing the extraction of on-site fingerprint features; judging that the extracted on-site fingerprint features are on-site fingerprint features with core points or on-site fingerprint features without core points; respectively comparing the on-site fingerprint features with all the templates with core points in the fingerprint template library if they are on-site fingerprint features with core points; respectively comparing the on-site fingerprint features with all the templates without core points in the fingerprint template library if they are on-site fingerprint features without core points.

Figure 1

**Description**

This application claims a priority to Chinese Patent Application No.200810207425.4, entitled "FAST FINGERPRINT SEARCHING METHOD AND FAST FINGERPRINT SEARCHING SYSTEM", filed on December 19, 2008 with State Intellectual Property Office of PRC, the content of which is hereby incorporated by reference in its entirety.

**FIELD OF THE INVENTION**

The present invention relates to the field of biometrics identification technique and particularly to a fast fingerprint searching method and a fast fingerprint searching system.

**BACKGROUND OF THE INVENTION**

Biometrics authentication technique is a technique for identifying personal identity by utilizing human biological features, and may be widely used in the fields of criminal investigation, security, bank and so on. At present, the most maturely developed and widely used technique among the biometrics authentication technique is a fingerprint authentication technique. Because fingerprints vary from person to person and from finger to finger, and is easy to acquire and identify, and the fingerprint authentication has advantages of convenient use, high security and so on, there are technical products for identifying personal identity using fingerprints in the fields of security, finance, and daily life of people, such as fingerprint entrance guard, fingerprint laptop, fingerprint bank teller machine, fingerprint bank POS machine, fingerprint USB Disk and the like.

The fingerprint authentication mainly includes two processes: fingerprint acquisition and fingerprint identification, that is, acquiring user fingerprints beforehand as fingerprint templates in a fingerprint template base; and comparing an acquired user fingerprint with the fingerprint templates in the fingerprint template base to find out a matching fingerprint template in a subsequent fingerprint identification process.

A fingerprint identification method is disclosed in a patent No. 02110873.0, which forms the early prevailing model of a fingerprint data searching algorithm. Specifically, the searching steps of the patent include: (1) performing a fast 1:1 comparison between a scene fingerprint feature and all the fingerprint templates in a fingerprint template base to obtain respective similarities; and (2) extracting first N templates with higher similarities according to the similarities of the fingerprint templates, and performing a precise comparison to get a comparison result. In this patent, the fast comparison is a simplified mode of the precise comparison, which compares the scene fingerprint feature with all the fingerprint templates according to a minutiae topological graph. A fingerprint searching will take a long time according to the method of the patent.

A fingerprint searching process is mentioned in another patent No. 200610065297.5, entitled "fingerprint identification method and system", which mainly relies on the similarity of the minutiae topological graph and combines with features of singular points, an average ridge density and a block directional diagram. For most of images, it is still necessary to calculate the similarities of the minutiae topological graphs, which increases the calculation time. Furthermore, if comparison of positions, directions and types is simply performed between every two singular points and the resulting similarities are added to a global feature similarity, it requires a high accuracy for computation of the singular points and only a little improvement in performance is obtained, but resulting in a longer time required for searching. Meanwhile, the utilization ratio of the singular points is lower.

At present, with the popularization of computer network, it is possible to identify a personal identity at a different place. Taking a finance system for example, if the fingerprint identification is adopted by a whole banking system to authenticate the personal identity, the stored fingerprint template base will be a mass database, and when a certain user needs to be authenticated, it will take a long time to find out a fingerprint template matching with the acquired fingerprint of the user from the mass database according to the above-mentioned searching method, which will not meet these requirements at all. That is to say, in the face of mass data volume and a subsequent continuous updating in computer hardware system, the time required for fingerprint comparison will be greatly increased and the comparison accuracy will even be affected if the existing technologies are used. A bottleneck of the current fingerprint identification technology is how to achieve a faster fingerprint searching and to ensure the accuracy of searching result, which is also a challenge for the searching algorithm.

**SUMMARY OF THE INVENTION**

The main object of the present invention is to provide a fast fingerprint searching method, for solving the technical problem in the prior art that the comparison between a scene fingerprint and fingerprint templates in a fingerprint database may not be quickly achieved in case of mass of data while ensuring accuracy.

Another object of the present invention is to provide a fast fingerprint searching system.

To achieve the above objects, the present invention provides a fast fingerprint searching method, in which fingerpint templates in a fingerprint template base are divided into a template with core point and a template without core point, and the method includes:

acquiring a fingerprint pattern to be compared, and extracting a scene fingerprint feature; and

judging that the extracted scene fingerprint feature is a scene fingerprint feature with core point or a scene fingerprint feature without core point;

comparing the scene fingerprint feature with all the templates with core point in the fingerprint template base respectively if the extracted scene fingerprint feature is a scene fingerprint feature with core point, or, comparing the scene fingerprint feature with all the templates without core point in the fingerprint template base respectively if the extracted scene fingerprint feature is a scene fingerprint feature without core point.

If a comparison result between the scene fingerprint feature and all the templates with core point indicates that there exists no matching template, the method further includes:

comparing the scene fingerprint feature with all the templates without core point in the fingerprint template base respectively.

If a comparison result between the scene fingerprint feature and all the templates without core point indicates that there exists no matching template, the method further includes:

comparing the scene fingerprint feature with all the templates with core point in the fingerprint template base respectively.

The method further includes:

determining that the scene fingerprint feature passes fingerprint verification if the comparison result between the scene fingerprint feature and the templates indicates that there exists a matching template; or, determining that the scene fingerprint feature is an illegal fingerprint if the comparison result between the scene fingerprint feature and the templates indicates that there exists no matching template.

The step of comparing the scene fingerprint feature with all the templates with core point in the fingerprint template base respectively includes:

performing a ridge line width histogram comparison between the scene fingerprint feature and all the templates with core point in the fingerprint template base respectively, and determining templates having comparison results not less than a predetermined similarity threshold of the ridge line width histogram to form a set $Q_x$;

performing a core point fast comparison between the scene fingerprint feature and the templates in the set $Q_x$ respectively, and determining first $n_x$ templates

with the highest similarity to form a set $M_x$, wherein $n_x$ is a natural number; and

performing a core point precise comparison between the scene fingerprint feature and all the templates in the set $M_x$ respectively.

The step of comparing the scene fingerprint feature with all the templates without core point in the fingerprint template base respectively includes:

performing a ridge line width histogram comparison between the scene fingerprint feature and all the templates without core point in the fingerprint template base respectively, and determining templates having comparison results not less than a predetermined similarity threshold of the ridge line width histogram to form a set $T_y$;

performing a minutia fast comparison between the scene fingerprint feature with core point and the templates in the set $T_y$ respectively, and determining first $n_y$ templates with the highest similarity to form a set $M_y$, wherein $n_y$ is a natural number; and

performing a minutia precise comparison between the scene fingerprint feature with core point and all the templates in the set $M_y$ respectively.

Also, the present invention provides a fast fingerprint searching system, which includes:

a fingerprint template base storing unit, for storing a fingerprint template base, wherein fingerprint templates in the fingerprint template base are divided into templates with core point and templates without core point;

a fingerprint acquiring device, for acquiring a scene fingerprint pattern to be compared;

a feature point extracting device, for extracting a feature point of the scene fingerprint pattern acquired by the fingerprint acquiring device;

a feature judging unit, for judging that the scene fingerprint feature extracted by the feature point extracting device is a scene fingerprint feature with core point or a scene fingerprint feature without core point; and

a fingerprint comparing unit, for comparing, in accordance with a judging result of the feature judging unit, the scene fingerprint feature with all the templates with core point in the fingerprint template base stored in the fingerprint template base storing unit respectively if the scene fingerprint feature is the one with core point; or, comparing the scene fingerprint feature with all the templates without core point in the fingerprint template base stored in the fingerprint template base storing unit respectively if the scene fingerprint feature is the one without core point.

The fingerprint comparing unit is also adapted for:

comparing the scene fingerprint feature with all the templates without core point in the fingerprint template base respectively if a comparison result between the scene fingerprint feature and all the templates with core point indicates that there exists no matching template; or

comparing the scene fingerprint feature with all the templates with core point in the fingerprint template base respectively if comparison result between the scene fingerprint feature and all the templates without core point indicates that there exists no matching template.

The fingerprint comparing unit includes:

a ridge line width histogram comparing device, for performing a ridge line width histogram comparison between the scene fingerprint feature and all templates within a preset range in the fingerprint template base respectively, and determining templates having comparison results not less than a predetermined similarity threshold of the ridge line width histogram to form a set;

a core point fast comparing device, for performing a core point fast comparison between the scene fingerprint feature and all the templates within the preset range, and determining first preset number of templates with the highest similarity to form a set;

a core point precise comparing device, for performing a core point precise comparison between the scene fingerprint feature and all the templates within the preset range, and determining a precisely matching template as a matching fingerprint of the scene fingerprint;

a minutia fast comparing device, for performing a minutia fast comparison between the scene fingerprint feature and all the templates within the preset range, and determining first preset number of templates with the highest similarity to form a set; and

a minutia precise comparing device, for performing a minutia precise comparison between the scene fingerprint feature and all the templates within the preset range, and determining a precisely matching template as a matching fingerprint of the scene fingerprint.

The present invention further provides a fast fingerprint searching system, including a fingerprint processing subsystem and a plurality of terminals, wherein each of the terminals is connected to the fingerprint processing subsystem via a private line or a network, and the fingerprint processing subsystem further comprises a database and a server, and wherein each of the terminals is adapted for acquiring a fingerprint pattern to be compared and extracting a scene fingerprint feature;
the database is adapted for storing a fingerprint template base, wherein fingerprint templates in the fingerprint template base are divided into templates with core point and templates without core point; and
the server is adapted for judging that the scene fingerprint feature extracted by each of the terminals is a scene fingerprint feature with core point or a scene fingerprint feature without core point, comparing the scene fingerprint feature with all the fingerprint templates with core point in the fingerprint template base if the scene fingerprint feature is the one with core point, or, comparing the scene fingerprint feature with all the fingerprint templates without core point in the fingerprint template base if the scene fingerprint feature is the one without core point.

The server is also adapted for:

comparing the scene fingerprint feature with all the templates without core point in the fingerprint template base if a comparison result between the scene fingerprint feature and all the templates with core point indicates that there exists no matching template; or

comparing the scene fingerprint feature with all the templates with core point in fingerprint template base if comparison result between the scene fingerprint feature and all the templates without core point indicates that there exists no matching template.

The present invention has the following advantages as compared with the prior art:

1. According to the fingerprint searching algorithm described in the present invention, data in the fingerprint template base may be quickly sifted by improving strategically the prior fingerprint template searching method, and especially by the searching flows by classes and by steps, thus greatly increasing the operational speed;

2. According to the fingerprint searching algorithm described in the present invention, approximation to a precisely matching index on the basis of an index of correctness may be achieved through a more reasonable searching and comparing flow, thus improving the searching accuracy;

3. According to the fingerprint searching algorithm described in the present invention, the utilization ratio of the core point is increased, and advantages of the core point that is the majority of the scene fingerprint feature in the searching and comparing may be extended sufficiently;

4. According to the fingerprint searching algorithm described in the present invention, a ridge line width histogram method is added, which further perfects the fingerprint searching algorithm; and

5. According to the fingerprint searching algorithm described in the present invention, the bottleneck for the searching speed caused by the fingerprint data expansion under networking is broken, which opens up a new space for the rapid development of the fingerprint identification equipments toward networking.

**BRIEF DESCRIPTION OF THE DRAWINGS**

Figure 1 is a relation diagram of classifying a fingerprint template base and a scene fingerprint feature according to a fast fingerprint searching method of the present invention;

Figure 2 is a flow schematic diagram of a first step of searching the scene fingerprint feature with core point by classes according to the fast fingerprint searching method of the present invention;

Figure 3 is a flow schematic diagram of a second step of searching the scene fingerprint feature with core point by classes according to the fast fingerprint searching method of the present invention;

Figure 4 is a flow schematic diagram of a first step of searching the scene fingerprint feature without core point by classes according to the fast fingerprint searching method of the present invention;

Figure 5 is a flow schematic diagram of a second step of searching the scene fingerprint feature without core point by classes according to the fast fingerprint searching method of the present invention;

Figure 6 is a principle structural schematic diagram of an embodiment of the fast fingerprint searching system according to the present invention; and

Figure 7 is a principle structural schematic diagram of another embodiment of the fast fingerprint searching system according to the present invention.

**DETAILED DESCRIPTION OF THE INVENTION**

The fast fingerprint searching method and the fast fingerprint searching system of the present invention will be illustrated specifically below in conjunction with the drawings.

Fingerprint searching of the present invention may quickly filter data in the fingerprint template base mainly through searching by classes and by steps, which increases the operational speed greatly. Before the specific illustration for the present invention, the terms referred to in the subsequent context are explained herein for illustrating the embodiments of the present invention clearly.

1. Fingerprint feature: Coded data for indicating features of a fingerprint image, which is generated by processing the fingerprint image.

2. Fingerprint template: A fingerprint feature stored in a media for fingerprint verifying and searching.

3. Core point: A peak of an innermost ridge line of a fingerprint, which describes the global feature of the fingerprint.

4. Core point fast comparison: A process for roughly calculating the similarity between a fingerprint feature and a fingerprint template according to the information of the core point.

5. Core point precise comparison: A process for precisely calculating the similarity between a fingerprint feature and a fingerprint template according to the information of the core point and determining whether the fingerprint feature and the fingerprint template come from one finger.

6. Minutiae fast comparison: A process for roughly calculating the similarity between a fingerprint feature and a fingerprint template according to minutia information.

7. Minutiae precise comparison: A process for precisely calculating the similarity between a fingerprint feature and a fingerprint template according to minutia information, and determining whether the fingerprint feature and the fingerprint template come from one finger.

All the fingerprint template sets described in the present invention are divided into a fingerprint template set Q with core point and a fingerprint template set T without core point. There are only two types of scene fingerprint feature, one is a scene fingerprint feature with core point, and the other is a scene fingerprint feature without core point.

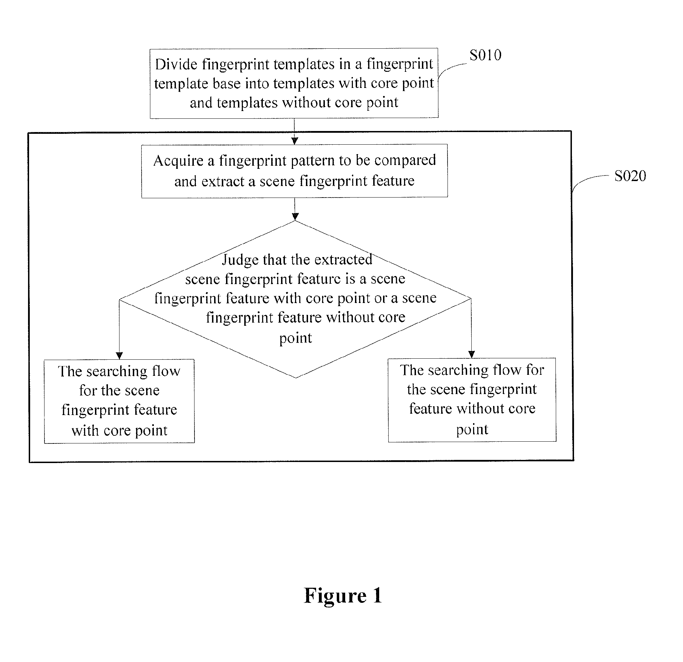

Figure 1 shows a flow diagram of a first step of the fast fingerprint searching method according to the present invention, which includes the following steps:

S010: dividing fingerprint templates in a fingerprint template base into templates with core point and templates without core point.

When a fingerprint template is acquired into the fingerprint template base, fingerprints are divided into the templates with core point and the templates without core point. Most of the templates in the template base are the templates with core point.

The following is a processing manner for fingerprint templates disclosed in a patent No. 200610065297.5. Different companies may adopt different processing manners for fingerprint templates. It is noted that the present embodiment may adopt the processing manner for fingerprint templates disclosed in the patent No. 200610065297.5, but not limited thereto. This is just for illustration so as to avoid the problem that the context is deemed to be not fully disclosed by the examiner.

The processing manner for fingerprint templates disclosed in the patent No. 200610065297.5 include the following steps: pre-processing and normalizing a fingerprint template when the fingerprint template is acquired into a fingerprint template base, calculating a block directional diagram to extract singular points, calculating a directional diagram, segmenting a background area and thinning the singular points; filtering and enhancing the image; calculating the density of ridge lines; binarizing the image and thinning the image, extracting minutia points, verifying the minutia points, deleting false minutia points, judging whether a core point exists, extracting an original core point according to the Poincare Index method, performing a subsequent processing according to the relationship between the original core point and the directional diagram, eliminating false core points and so on. The information of the core point includes the information of position, direction and quality. Ultimately, the features of minutia points, singular points, average ridge density, block directional diagram and the like of the fingerprint are compressed into a scene fingerprint feature or a template to be stored in the fingerprint template base.

It is also noted to the present invention that the fingerprint template base may be divided into two sub-bases in advance: a template base with core point and a template base without core point. After pre-processing and normalizing to the acquired fingerprint template, it needs to determine to store the fingerprint template in which base depending on whether there is a core point feature in the acquired fingerprint template. Alternatively, in the present invention, it is possible to set a flag in the data of each fingerprint template for indicating whether there exists a core point feature, for example, the flag is "1" if the fingerprint template has the core point feature; the flag is "0" if the fingerprint template has no core point feature.

S020: acquiring a fingerprint pattern to be compared, extracting a scene fingerprint feature, and judging that the extracted scene fingerprint feature is a scene fingerprint feature with core point or a scene fingerprint feature without core point.

When a certain user needs to be authenticated, a fingerprint of the user is acquired, i.e., a fingerprint pattern to be compared is acquired, a scene fingerprint feature is extracted, and it is judged that the extracted scene fingerprint feature is a scene fingerprint feature with core point or a scene fingerprint feature without core point. Most scene fingerprint features are those with core point.

The process of extracting the scene fingerprint feature is similar to that of extracting the fingerprint template mentioned in the step S010. As known technologies, detailed description thereof is not made herein.

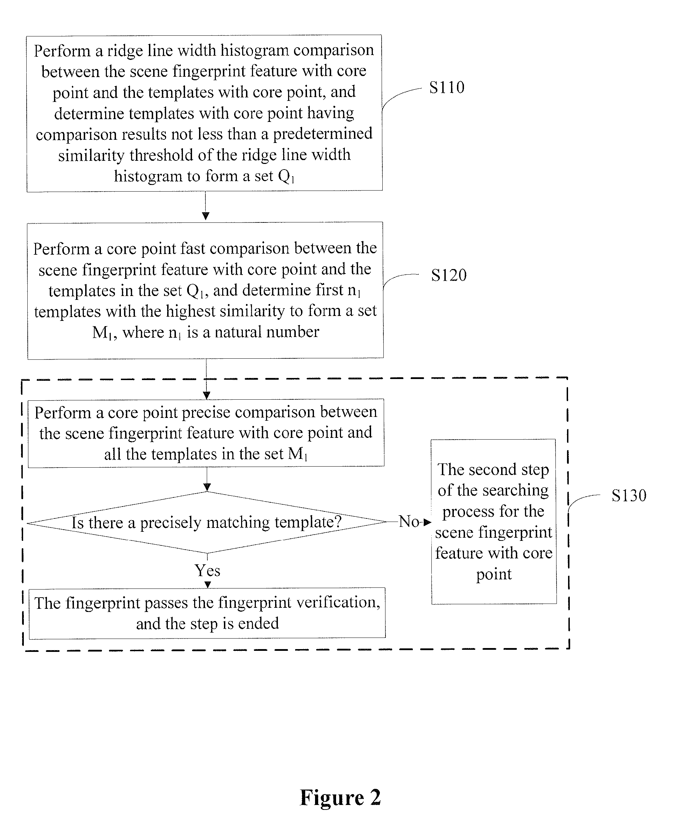

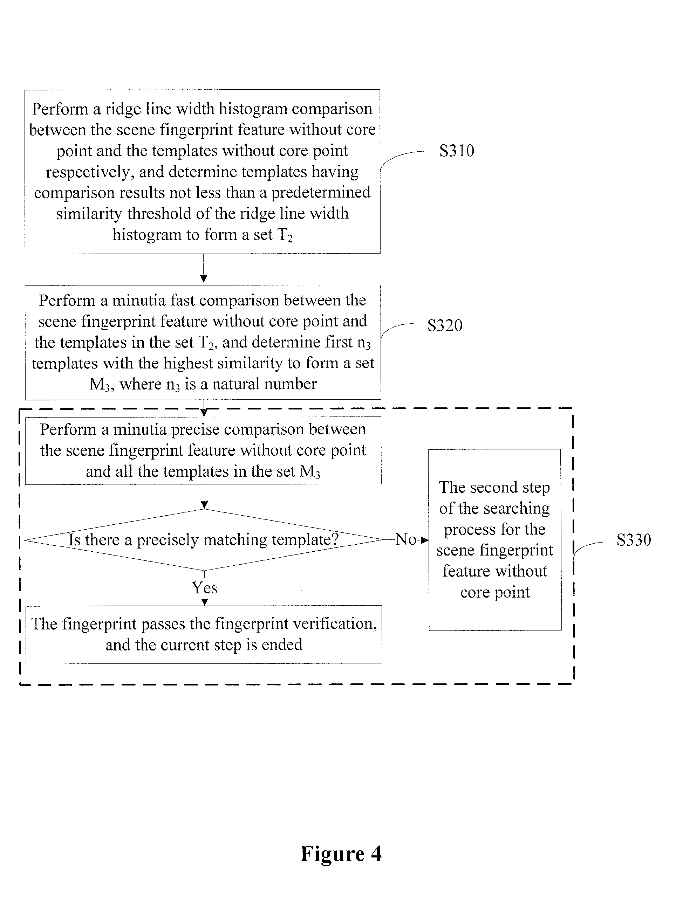

If the scene fingerprint to be compared is featured with core point, the method goes into the searching flow for the scene fingerprint feature with core point to perform the processing steps as shown in Figure 2; and if the scene fingerprint to be compared is featured without core point, the method goes into the searching flow for the scene fingerprint feature without core point to perform the processing steps as shown in Figure 4.

First step

As shown in Figure 2, the searching flow includes the following steps:

S110: if the scene fingerprint to be compared is featured with core point, performing a ridge line width histogram comparison between the scene fingerprint feature with core point and all templates with core point in the fingerprint template base respectively, and determining templates with core point having comparison results not less than a predetermined similarity threshold in the ridge line width histogram to form a set $Q_1$.

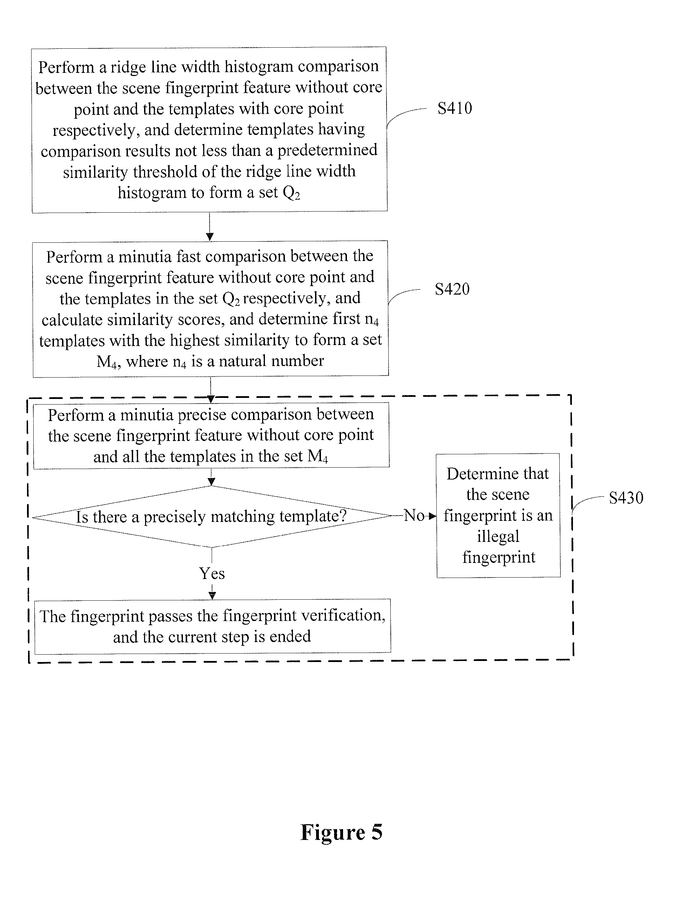

it is judged that the scene fingerprint feature to be compared is the one with core point or the one without core point, and step S110 is performed if the scene fingerprint feature to be compared is the one with core point; and the searching process without core point as shown in Figure 4 and Figure 5 is performed if the scene fingerprint feature to be compared is the one without core point. Alternatively, an embodiment of the present invention may be as follows: the searching process is ended if the scene fingerprint needed to be compared is featured without core point, that is to say, this embodiment only provides a comparison for fingerprints featured with core point.

The ridge line width histogram is a geometrical graph indicating the distribution of a ridge line width of a fingerprint image, with the abscissa representing a ridge line width value and the ordinate representing the number of times that the ridge line width value occurs. How to extract the ridge line width histogram is a known technique, which will not be described in detail herein.

The computing formula for similarity in the ridge line width histogram is as follows:

The ridge line width histograms of the template and the feature are respectively defined as discrete functions $H_1(R_i) = m_i$, $H_2(R_i) = n_i$, where $R_i$ is the ith level ridge line width, and $m_i$ and $n_i$ represent the number of pixels of which the ridge line width level is $R_i$. $H_1(R_i)$ and $H_2(R_i)$ are recorded in template data and feature data respectively, thus the similarity between the ridge line width histograms of the template and the feature is:

$$SimH = a \cdot e^{\dfrac{\sqrt{\sum\limits_{i=1}^{8}[H_1(i) - H_2(i)]^2}}{b}},$$

where the value of SimH is in the range of 0~100.

The present invention defines a similarity threshold of the ridge line width histogram, which is a score threshold for judging whether the histograms of the scene fingerprint feature and the fingerprint template are similar.

The similarity threshold of the ridge line width histogram is preset, and may also be chosen by the skilled according to the scene situation, where the similarity threshold of the ridge line width histogram is a numerical value.

Furthermore, in the present embodiment, the templates with core point having the comparison results not less than the predetermined similarity threshold of the ridge line width histogram form the set $Q_1$. In the present invention, the fingerprint templates may be placed into two different sets according to the comparison results.

Alternatively, in the present invention, a flag in the data of each fingerprint template is set for indicating that the comparison result is not less than or less than the predetermined similarity threshold of the ridge line width histogram. For example, the flag is "1" if there exists a fingerprint template having a comparison result not less than the predetermined similarity threshold of the ridge line width histogram, and the flag is "0" if there exists a fingerprint template having a comparison result less than the predetermined similarity threshold of the ridge line width histogram. Every time when performing a ridge line width histogram comparison between the fingerprint to be compared and the fingerprint templates, the flags of the fingerprint templates are modified.

S120: performing a core point fast comparison between the scene fingerprint feature with core point and the templates in the set $Q_1$, determining first $n_1$ templates with the highest similarity to form a set $M_1$, where $n_1$ is a natural number.

S 130: performing a core point precise comparison between the scene fingerprint feature with core point and all the templates in the set $M_1$, and determining a precisely matching template as a matching fingerprint corresponding to the scene fingerprint feature with core point.

It is defined in the present invention that a score threshold for the precise comparison is a score threshold used for determining whether the scene fingerprint feature and the template come from one finger. It is determined that the scene fingerprint feature and a template come from one finger if the score for the precise comparison between the scene fingerprint feature and the template is not less than the score threshold for the precise comparison; and it is determined that the scene fingerprint feature and a template come from different fingers if the score for the precise comparison between the scene fingerprint feature and the template is less than the score threshold for the precise comparison.

The core point fast comparison algorithm and the core point precise comparison algorithm may be known algorithms, which will not be described in detail herein.

The core point precise comparison is performed between the scene fingerprint feature with core point and all the templates in the set $M_1$, and similarity cores are calculated. Once there occurs a template with a similarity core not less than the given score threshold for the precise comparison, it is determined that the feature passes the fingerprint verification, and then the searching process is ended.

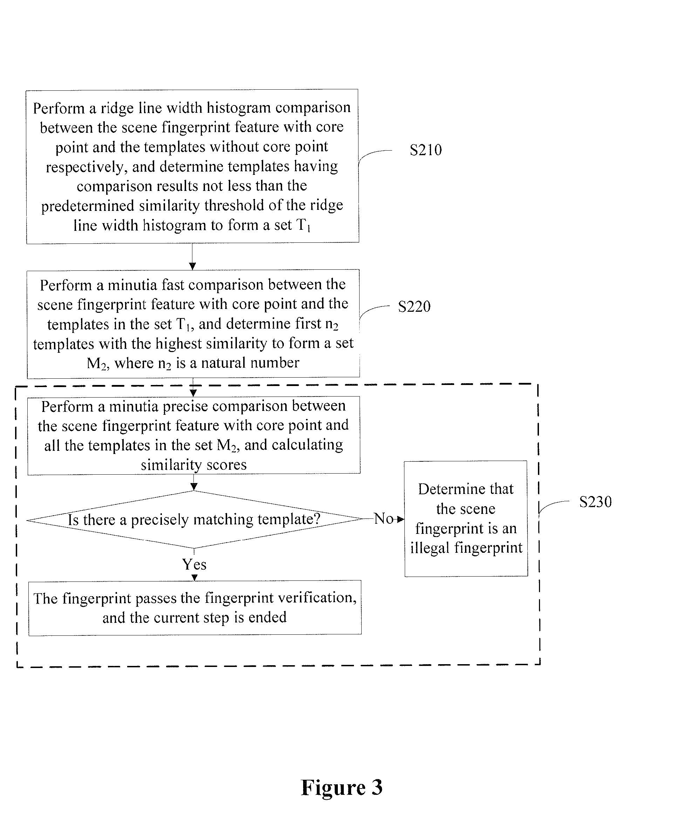

If there is no precisely matching template after performing the core point precise comparison between the scene fingerprint feature with core point and all the templates in the set $M_1$, the second step of the searching process is performed as shown in Figure 3. However, the searching process for most scene fingerprint features with core point will be ended here, and a correct template will be obtained. Therefore, in the case that requirements for precision is not high, it is possible to perform only the steps as shown in Figure 2.

Second step

After performing a core point precise comparison between the scene fingerprint feature with core point and all the templates in the set $M_1$, if there is no precisely matching template, the steps as shown in Figure 3 are performed:

S210: performing a ridge line width histogram comparison between the scene fingerprint feature with core point and all the templates without core point in the fingerprint template base, and determining templates having comparison results not less than a predetermined similarity threshold of the ridge line width histogram to form a set $T_1$.

S220: performing a minutia fast comparison between the scene fingerprint feature with core point and the templates in the set $T_1$, and determining first $n_2$ templates with the highest similarity to form a set $M_2$, where $n_2$ is a natural number.

S230: performing a minutia precise comparison between the scene fingerprint feature with core point and all the templates in the set $M_2$, and calculating similarity scores. Once there occurs a template with a similarity core not less than a given score threshold for the precise comparison, it is determined that the scene fingerprint feature with core point passes the fingerprint verification, and the searching process is ended; if all the similarity cores are less than a given score threshold for the precise comparison, it is determined that the scene fingerprint feature with core point is an illegal scene fingerprint feature.

The minutia fast comparison algorithm and the minutia precise comparison algorithm are existing techniques, thus no more description will be made herein.

If the scene fingerprint feature to be compared is a scene fingerprint feature without core point, the steps as shown in Figure 4 are performed:

First step

S310: performing a ridge line width histogram comparison between the scene fingerprint feature without core point and all the templates without core point in the fingerprint template base, and determining templates having comparison results not less than a predetermined similarity threshold of the ridge line width histogram to form a set $T_2$.

S320: performing a minutia fast comparison between the scene fingerprint feature without core point and the templates in the set $T_2$, and determining first $n_3$ templates with the highest similarity to form a set $M_3$, where $n_3$ is a natural number.

S330: performing a minutia precise comparison between the scene fingerprint feature without core point and all the templates in the set $M_3$, and determining a precisely matching template as a matching fingerprint of the fingerprint under comparison.

The searching process for most scene fingerprint features without core point will be ended here, and a correct template will be obtained. Therefore, it is possible for the scene fingerprint feature without core point to finish the process in this step in the event that requirement for precision is not high.

If there is no precisely matching template after performing a minutia precise comparison between the scene fingerprint feature without core point and all the templates in the set $M_3$, the steps as shown in Figure 5 may be performed.

Second step

S410: performing a minutia precise comparison between the scene fingerprint feature without core point and all the templates in the set $M_3$, and if there exists no precisely matching template, performing a ridge line width histogram comparison between the scene fingerprint feature without core point and all the templates with core point in the fingerprint template base, and determining templates having comparison results not less than a predetermined similarity threshold of the ridge line width histogram to form a set $Q_2$.

S420: performing a minutia fast comparison between the scene fingerprint feature without core point and the templates in the set $Q_2$, calculating similarity scores, and determining first $n_4$ templates with the highest similarity score to form a set $M_4$, where $n_4$ is a natural number.

S430: performing a minutia precise comparison between the scene fingerprint feature without core point and all the templates in the set $M_4$, and calculating similarity scores. Once there occurs a template with a similarity score not less than a given score threshold for the precise comparison, it is determined that the scene fingerprint feature without core point passes the fingerprint verification, and the searching process is ended; if all the similarity scores are less than a given score threshold for the precise comparison, it is determined that the scene fingerprint feature without core point is an illegal scene fingerprint feature.

According to the fingerprint searching algorithm described in the present invention, the data in the fingerprint template base may be quickly filtered by improving strategically the existing fingerprint template searching method, and especially through the searching flows by classes and by steps, and thus operational speed is greatly increased.

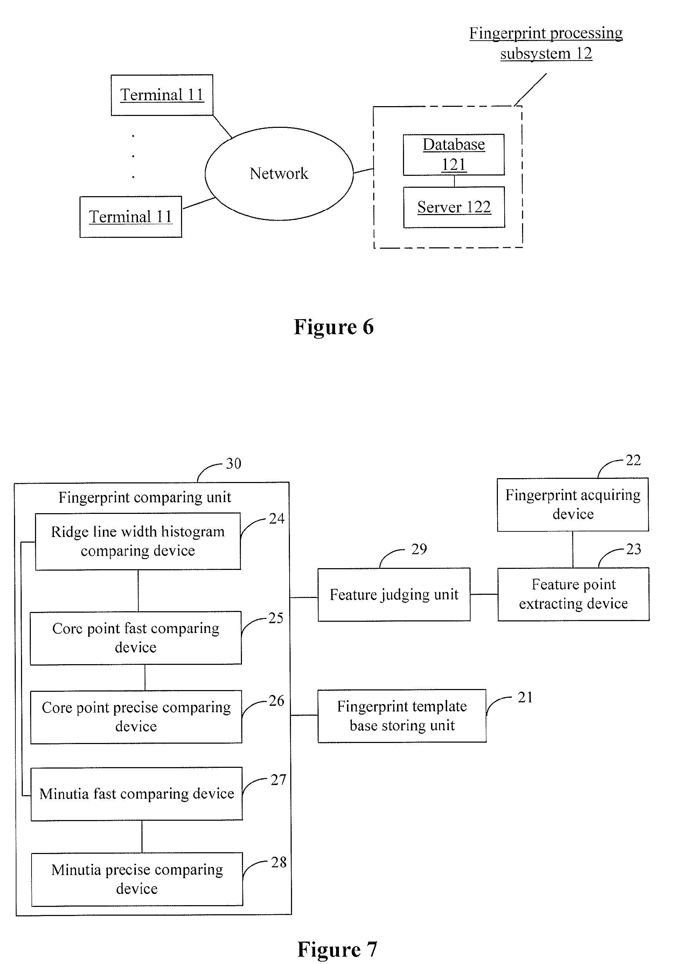

Figure 6 shows a principle structural schematic diagram of a first embodiment of the fast fingerprint searching system according to the present invention, which includes a plurality of terminals 11, each of which includes a fingerprint collector, and a fingerprint processing subsystem 12. The terminals 11 are connected to the fingerprint processing subsystem 12 via a private line or a network.

The fingerprint processing subsystem 12 further includes a database 121 and a server 122.

The database 121 is adapted for storing a fingerprint template base, in which fingerprint templates in the fingerprint template base are divided into templates with core point and templates without core point. The database 121 includes at least a fingerprint template base storing unit for storing the fingerprint template base and a flow storing unit for storing a processing flow.

The server 122 is adapted for judging that a scene fingerprint feature extracted by each of the terminals is a scene fingerprint feature with core point or a scene fingerprint feature without core point, comparing the scene fingerprint feature with all the templates with core point in the fingerprint template base respectively if the scene fingerprint feature is the one with core point, or, comparing the scene fingerprint feature with all the templates without core point in the fingerprint template base respectively if the scene fingerprint feature is the one without core point.

The server 122 is also adapted for: comparing the scene fingerprint feature respectively with all the templates without core point in the fingerprint template base if a comparison result between the scene fingerprint feature and all the templates with core point indicates that there exists no matching template; or, comparing the scene fingerprint feature with all the templates with core point in the fingerprint template base if a comparison result between the scene fingerprint feature and all the templates without core point indicates that there exists no matching template.

The server 122 further includes:

A ridge line width histogram comparing device for performing a ridge line width histogram comparison between the scene fingerprint feature and all templates within a preset range in the fingerprint template base respectively and determining templates having comparison results not less than a predetermined similarity threshold of the ridge line width histogram to form a set;

A core point fast comparing device for performing a core point fast comparison between the scene fingerprint feature and all the templates within the preset range respectively and determining first preset number of templates with the highest similarity to form a set; and

A core point precise comparing device for performing a core point precise comparison between the scene fingerprint feature and all the templates within the preset range and determining a precisely matching template as a matching fingerprint of the scene fingerprint.

The server 122 may further include: a minutia fast comparing device for performing a minutia fast comparison between the scene fingerprint feature and all the templates within the preset range and determining first preset number of templates with the highest similarity to form a set; and

A minutia precise comparing device for performing a minutia precise comparison between the scene fingerprint feature and all the templates within the preset range and determining a precisely matching template as a matching fingerprint of the scene fingerprint.

The ridge line width histogram comparing device, the core point fast comparing device, the core point precise comparing device, the minutia fast comparing device and the minutia precise comparing device are logical units.

Each of the terminals 11 is adapted for acquiring a fingerprint pattern to be compared and extracting a scene fingerprint feature. Each of the terminals 11 further includes:

A fingerprint acquiring device for acquiring a scene fingerprint image to be compared; and

A feature point extracting device, connected with the fingerprint acquiring device and adapted for extracting a feature point of the acquired scene fingerprint image. The fingerprint acquiring device is typically a fingerprint collector. The feature point extracting device, which is a logical unit, is typically implemented in the manner of software by a processor.

Figure 7 shows a principle structural schematic diagram of another embodiment of the fast fingerprint searching system according to the present invention, which includes:

A fingerprint template base storing unit 21 for storing a fingerprint template base in which all fingerprint templates are classified according to whether each template has a core point;

A fingerprint acquiring device 22 for acquiring a fingerprint image to be compared;

A feature point extracting device 23 connected with the fingerprint acquiring device and adapted for extracting a feature point of the acquired fingerprint image;

A feature judging unit 29 for judging whether the scene fingerprint feature extracted by the feature point extracting device 23 is a scene fingerprint feature with core point or a scene fingerprint feature without core point; and

A fingerprint comparing unit 30 for comparing, in accordance with a judging result from the feature judging unit 29, the scene fingerprint feature respectively with all templates with core point in the fingerprint template base stored in the fingerprint template base storing unit 21 if the scene fingerprint feature is the one with core point, or, comparing the scene fingerprint feature respectively with all templates without core point in the fingerprint template base stored in the fingerprint template base storing unit 21 if the scene fingerprint feature is the one without core point.

Specifically, the fingerprint comparing unit 30 further includes:

A ridge line width histogram comparing device 24 for performing a ridge line width histogram comparison between the scene fingerprint feature and all templates within a preset range in the fingerprint template base and determining templates having comparison results not less than a predetermined similarity threshold of the ridge line width histogram to form a set;

A core point fast comparing device 25 for performing a core point fast comparison between the scene fingerprint feature and all the templates within the preset range and determining first preset number of templates with the highest similarity to form a set; and

A core point precise comparing device 26 for performing a core point precise comparison between the scene fingerprint feature and all the templates within the preset range and determining a precisely matching template as a matching fingerprint of the scene fingerprint.

The fingerprint comparing unit 30 may further include: a minutia fast comparing device 27 for performing a minutia fast comparison between the scene fingerprint feature and all the templates within the preset range and determining first preset number of templates with the highest similarity to form a set; and

A minutia precise comparing device 28 for performing a minutia precise comparison between the scene fingerprint feature and all the templates within the preset range and determining a precisely matching template as a matching fingerprint of the scene fingerprint.

There may also be a flow storing unit for storing a processing flow in the present embodiment.

The foregoing descriptions are only several specific embodiments of the present invention, but not intended to limit the present invention. Any variations that can be conceived by those skilled in the art should fall within the scope of protection of the present invention.

**Claims**

1. A fast fingerprint searching method, wherein fingerprint templates in a fingerprint template base are divided into a template with core point and a template without core point, and the method comprises:

acquiring a fingerprint pattern to be compared, and extracting a scene fingerprint feature; and judging that the extracted scene fingerprint feature is a scene fingerprint feature with core point or a scene fingerprint feature without core point; comparing the scene fingerprint feature with all the templates with core point in the fingerprint template base respectively if the extracted scene fingerprint feature is a scene fingerprint feature with core point, or, comparing the scene fingerprint feature with all the templates without core point in the fingerprint template base respectively if the extracted scene fingerprint feature is a scene fingerprint feature without core point.

2. The method according to claim 1, wherein if a comparison result between the scene fingerprint feature and all the templates with core point indicates that there exists no matching template, the method further comprises:

comparing the scene fingerprint feature with all the templates without core point in the fingerprint template base respectively.

3. The method according to claim 1, wherein if a comparison result between the scene fingerprint feature and all the templates without core point indicates that there exists no matching template, the method further comprises:

comparing the scene fingerprint feature with all the templates with core point in the fingerprint template base respectively.

4. The method according to any of claims 1 to 3, further comprising:

determining that the scene fingerprint feature passes fingerprint verification if the comparison result between the scene fingerprint feature and the templates indicates that there exists a matching template; or, determining that the scene fingerprint feature is an illegal fingerprint if the comparison result between the scene fingerprint feature and the templates indicates that there exists no matching template.

5. The method according to any of claims 1 to 3, wherein the step of comparing the scene fingerprint feature with all the templates with core point in the fingerprint template base respectively comprises:

performing a ridge line width histogram comparison between the scene fingerprint feature and all the templates with core point in the fingerprint template base respectively, and determining templates having comparison results not less than a predetermined similarity threshold of the ridge line width histogram to form a set $Q_x$; performing a core point fast comparison between the scene fingerprint feature and the templates in the set $Q_x$ respectively, and determining first $n_x$ templates with the highest similarity to form a set $M_x$, wherein $n_x$ is a natural number; and performing a core point precise comparison between the scene fingerprint feature and all the templates in the set $M_x$ respectively.

6. The method according to any of claims 1 to 3, wherein the step of comparing the scene fingerprint feature with all the templates without core point in the fingerprint template base respectively comprises:

performing a ridge line width histogram comparison between the scene fingerprint feature and all the templates without core point in the fingerprint template base respectively, and determining templates having comparison results not less than a predetermined similarity threshold of the ridge line width histogram to form a set $T_y$; performing a minutia fast comparison between the scene fingerprint feature with core point and the templates in the set $T_y$ respectively, and determining first $n_y$ templates with the highest similarity to form a set $M_y$, wherein $n_y$ is a natural number; and performing a minutia precise comparison between the scene fingerprint feature with core point and all the templates in the set $M_y$ respectively.

7. A fast fingerprint searching system, comprising:

a fingerprint template base storing unit, for storing a fingerprint template base, wherein fingerprint templates in the fingerprint template base are divided into templates with core point and templates without core point; a fingerprint acquiring device, for acquiring a scene fingerprint pattern to be compared; a feature point extracting device, for extracting a feature point of the scene fingerprint pattern acquired by the fingerprint acquiring device; a feature judging unit, for judging that the scene fingerprint feature extracted by the feature point extracting device is a scene fingerprint feature with core point or a scene fingerprint feature without core point; and a fingerprint comparing unit, for comparing, in accordance with a judging result of the feature judging unit, the scene fingerprint feature with all the templates with core point in the fingerprint template base stored in the fingerprint template base storing unit respectively if the scene fingerprint feature is the one with core point; or, comparing the scene fingerprint feature with all the templates without core point in the fingerprint template base stored in the fingerprint template base storing unit respectively if the scene fingerprint feature is the one without core point.

8. The system according to claim 7, wherein the fingerprint comparing unit is also adapted for:

comparing the scene fingerprint feature with all the templates without core point in the fingerprint template base respectively if a comparison result between the scene fingerprint feature and all the templates with core point indicates that there exists no matching template; or

comparing the scene fingerprint feature with all the templates with core point in the fingerprint template base respectively if comparison result between the scene fingerprint feature and all the templates without core point indicates that there exists no matching template.

9. The system according to claim 7 or 8, wherein the fingerprint comparing unit comprises:

a ridge line width histogram comparing device, for performing a ridge line width histogram comparison between the scene fingerprint feature and all templates within a preset range in the fingerprint template base respectively, and determining templates having comparison results not less than a predetermined similarity threshold of the ridge line width histogram to form a set;

a core point fast comparing device, for performing a core point fast comparison between the scene fingerprint feature and all the templates within the preset range, and determining first preset number of templates with the highest similarity to form a set;

a core point precise comparing device, for performing a core point precise comparison between the scene fingerprint feature and all the templates within the preset range, and determining a precisely matching template as a matching fingerprint of the scene fingerprint;

a minutia fast comparing device, for performing a minutia fast comparison between the scene fingerprint feature and all the templates within the preset range, and determining first preset number of templates with the highest similarity to form a set; and

a minutia precise comparing device, for performing a minutia precise comparison between the scene fingerprint feature and all the templates within the preset range, and determining a precisely matching template as a matching fingerprint of the scene fingerprint.

10. A fast fingerprint searching system, comprising a fingerprint processing subsystem and a plurality of terminals, wherein each of the terminals is connected to the fingerprint processing subsystem via a private line or a network, and the fingerprint processing subsystem further comprises a database and a server, and wherein

each of the terminals is adapted for acquiring a fingerprint pattern to be compared and extracting a scene fingerprint feature;

the database is adapted for storing a fingerprint template base, wherein fingerprint templates in the fingerprint template base are divided into templates with core point and templates without core point; and

the server is adapted for judging that the scene fingerprint feature extracted by each of the terminals is a scene fingerprint feature with core point or a scene fingerprint feature without core point, comparing the scene fingerprint feature with all the fingerprint templates with core point in the fingerprint template base if the scene fingerprint feature is the one with core point, or, comparing the scene fingerprint feature with all the fingerprint templates without core point in the fingerprint template base if the scene fingerprint feature is the one without core point.

11. The system according to claim 10, wherein the server is also adapted for:

comparing the scene fingerprint feature with all the templates without core point in the fingerprint template base if a comparison result between the scene fingerprint feature and all the templates with core point indicates that there exists no matching template; or

comparing the scene fingerprint feature with all the templates with core point in fingerprint template base if comparison result between the scene fingerprint feature and all the templates without core point indicates that there exists no matching template.

Divide fingerprint templates in a fingerprint template base into templates with core point and templates without core point ⟋ S010

Acquire a fingerprint pattern to be compared and extract a scene fingerprint feature ⟋ S020

Judge that the extracted scene fingerprint feature is a scene fingerprint feature with core point or a scene fingerprint feature without core point

The searching flow for the scene fingerprint feature with core point

The searching flow for the scene fingerprint feature without core point

**Figure 1**

Perform a ridge line width histogram comparison between the scene fingerprint feature with core point and the templates with core point, and determine templates with core point having comparison results not less than a predetermined similarity threshold of the ridge line width histogram to form a set $Q_1$

S110

Perform a core point fast comparison between the scene fingerprint feature with core point and the templates in the set $Q_1$, and determine first $n_1$ templates with the highest similarity to form a set $M_1$, where $n_1$ is a natural number

S120

Perform a core point precise comparison between the scene fingerprint feature with core point and all the templates in the set $M_1$

Is there a precisely matching template? —No→

The second step of the searching process for the scene fingerprint feature with core point

S130

Yes

The fingerprint passes the fingerprint verification, and the step is ended

**Figure 2**

Perform a ridge line width histogram comparison between the scene fingerprint feature with core point and the templates without core point respectively, and determine templates having comparison results not less than the predetermined similarity threshold of the ridge line width histogram to form a set $T_1$ — S210

Perform a minutia fast comparison between the scene fingerprint feature with core point and the templates in the set $T_1$, and determine first $n_2$ templates with the highest similarity to form a set $M_2$, where $n_2$ is a natural number — S220

Perform a minutia precise comparison between the scene fingerprint feature with core point and all the templates in the set $M_2$, and calculating similarity scores

Is there a precisely matching template? — No→ Determine that the scene fingerprint is an illegal fingerprint — S230

Yes

The fingerprint passes the fingerprint verification, and the current step is ended

**Figure 3**

Perform a ridge line width histogram comparison between the scene fingerprint feature without core point and the templates without core point respectively, and determine templates having comparison results not less than a predetermined similarity threshold of the ridge line width histogram to form a set $T_2$ ⟵ S310

Perform a minutia fast comparison between the scene fingerprint feature without core point and the templates in the set $T_2$, and determine first $n_3$ templates with the highest similarity to form a set $M_3$, where $n_3$ is a natural number ⟵ S320

Perform a minutia precise comparison between the scene fingerprint feature without core point and all the templates in the set $M_3$

Is there a precisely matching template? —No→

Yes

The fingerprint passes the fingerprint verification, and the current step is ended

The second step of the searching process for the scene fingerprint feature without core point ⟵ S330

**Figure 4**

Perform a ridge line width histogram comparison between the scene fingerprint feature without core point and the templates with core point respectively, and determine templates having comparison results not less than a predetermined similarity threshold of the ridge line width histogram to form a set $Q_2$

S410

Perform a minutia fast comparison between the scene fingerprint feature without core point and the templates in the set $Q_2$ respectively, and calculate similarity scores, and determine first $n_4$ templates with the highest similarity to form a set $M_4$, where $n_4$ is a natural number

S420

Perform a minutia precise comparison between the scene fingerprint feature without core point and all the templates in the set $M_4$

Is there a precisely matching template? —No→ Determine that the scene fingerprint is an illegal fingerprint

S430

Yes

The fingerprint passes the fingerprint verification, and the current step is ended

**Figure 5**

Fingerprint processing subsystem 12

Terminal 11

Terminal 11

Network

Database 121

Server 122

**Figure 6**

30

Fingerprint comparing unit

Ridge line width histogram comparing device — 24

Core point fast comparing device — 25

Core point precise comparing device — 26

Minutia fast comparing device — 27

Minutia precise comparing device — 28

Fingerprint acquiring device — 22

Feature judging unit — 29

Feature point extracting device — 23

Fingerprint template base storing unit — 21

**Figure 7**

# INTERNATIONAL SEARCH REPORT

| | International application No. |
|---|---|
| | PCT/CN2009/071257 |

**A. CLASSIFICATION OF SUBJECT MATTER**

**See the extra sheet**

According to International Patent Classification (IPC) or to both national classification and IPC

**B. FIELDS SEARCHED**

Minimum documentation searched (classification system followed by classification symbols)

IPC:G06K9/-;G06F17/-

Documentation searched other than minimum documentation to the extent that such documents are included in the fields searched

Electronic data base consulted during the international search (name of data base and, where practicable, search terms used)

CNPAT,CNKI,WPI,EPODOC,PAJ: fingerprint; extract; compare+; match; identif+; search; retriev+; classif+; core; central; singular; ridge; histogram

**C. DOCUMENTS CONSIDERED TO BE RELEVANT**

| Category* | Citation of document, with indication, where appropriate, of the relevant passages | Relevant to claim No. |
|---|---|---|
| X | ZhangYing, Research of Fingerprint Recognition Algorithm Based on Large-Scale, CNKI China Master's Theses Full-text Database, 19 Nov.2008 (19.11.2008) pages 6-7,24-29,37-38 | 1-4,7-8,10-11 |
| A | | 5-6,9 |
| A | CN 1506903 A(INST OF AUTOMATION CAS) 23 Jun.2004 (23.06.2004) the whole document | 1-11 |
| A | CN 1521684 A(UNIV HEFEI TECHNOLOGY) 18 Aug.2004 (18.08.2004) the whole document | 1-11 |
| A | WO 2006062378 A1(LG ELECTRONICS INC) 15 Jun.2006 (15.06.2006) the whole document | 1-11 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 Sep. 2009 (15.09.2009) | **01 Oct. 2009 (01.10.2009)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 | **HAO, Xiaoli** |
| Facsimile No. 86-10-62019451 | Telephone No. (86-10)62411770 |

Form PCT/ISA/210 (second sheet) (April 2007)

## INTERNATIONAL SEARCH REPORT
Information on patent family members

| International application No. |
| --- |
| PCT/CN2009/071257 |

| Patent Documents referred in the Report | Publication Date | Patent Family | Publication Date |
| --- | --- | --- | --- |
| CN 1506903 A | 23.06.2004 | CN 100414558 C | 27.08.2008 |
| CN 1521684 A | 18.08.2004 | CN 1246800 C | 22.03.2006 |
| WO 2006062378 A1 | 15.06.2006 | EP 1831819 A1 | 12.09.2007 |
| | | US 2006126908 A1 | 15.06.2006 |
| | | KR 20060064710 A | 14.06.2006 |
| | | KR 100647362 B | 23.11.2006 |

Form PCT/ISA/210 (patent family annex) (April 2007)

## INTERNATIONAL SEARCH REPORT

| International application No. |
| --- |
| PCT/CN2009/071257 |

Continuation of:

Second sheet " A: CLASSIFICATION OF SUBJECT MATTER ":

G06K 9/00(2006.01)i

G06F 17/30(2006.01)i

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810207425
- WO 02110873 A
- WO 200610065297 A